# EUROPEAN PATENT APPLICATION

(11) **EP 3 730 361 A1**
(43) Date of publication of application: **28.10.2020**
(21) Application number: 20162744.5
(22) Date of filing: 12.03.2020
(51) Int. Cl.: B60T 7/22, B60W 30/18, B60W 30/095

(54) **VEHICLE CONTROL DEVICE, METHOD AND COMPUTER PROGRAM PRODUCT**

(30) Priority: 24.04.2019 JP 2019082575
(71) Applicant: Mazda Motor Corporation, Hiroshima 730-8670 (JP)
(72) Inventor: OHMURA, Hiroshi, Fuchu-cho, Aki-gun, Hiroshima 730-8670 (JP)
(74) Representative: Müller-Boré & Partner Patentanwälte PartG mbB

(57) **Abstract**

A vehicle control device 100 includes a controller 10 configured to perform a control of causing an own vehicle 1 to be automatically braked such that a collision between the own vehicle 1 and a crossing vehicle 81 is avoided when the own vehicle 1 enters a first intersecting lane 91. The controller 10 is configured to set, between the own vehicle 1 and the crossing vehicle 81, a virtual area W1 which is configured to move with advance of the crossing vehicle 81 and which is configured to extend in an advancing direction of the crossing vehicle 81, and perform a control of causing the own vehicle 1 to be automatically braked to prevent the own vehicle 1 from contacting with the virtual area W1.

## Description

### BACKGROUND OF THE INVENTION

### Field of the Invention

The present disclosure relates to a vehicle control device which is configured to assist traveling of a vehicle, a vehicle control method and a computer program product.

### Description of the Related Art

Conventionally, to avoid a collision between an own vehicle and a predetermined object (a preceding vehicle, a pedestrian, an obstacle or the like) around the own vehicle, a technique relating to an automatic brake for causing the own vehicle to be automatically braked has been proposed. For example, Japanese Patent Laid-Open No. 2018-95097 (patent document 1) discloses a technique where the crossing position of the travel locus of the own vehicle and the travel locus of an oncoming vehicle is acquired, and the automatic brake is controlled corresponding to the time required for the own vehicle to arrive at this crossing position. Further, for example, Japanese Patent Laid-Open No. 2018-197964 (patent document 2) discloses a technique where a virtual stop line is set on map data based on stop positions of a plurality of vehicles, and an automatic brake is controlled such that the vehicle is caused to stop at this virtual stop line.

### SUMMARY OF THE INVENTION

In the conventional technique, to avoid a collision between an own vehicle and an oncoming vehicle when the own vehicle traverses an opposite lane, the automatic brake is controlled basically based on a possibility of a direct collision of the own vehicle with the oncoming vehicle (typically, Time to Collision (TTC) where the own vehicle collides with the oncoming vehicle). However, conventionally, there has been no technique where, when the own vehicle enters an intersecting lane (e.g., a lane intersecting with an own-vehicle lane at an intersection), a virtual object which corresponds to a crossing vehicle (e.g., a vehicle traveling in the intersecting lane) is set, and the automatic brake is controlled not based on the crossing vehicle, but based on this virtual object. In other words, there is no technique where the automatic brake is controlled such that the own vehicle is prevented from coming into contact with the virtual object, thus avoiding a collision between the own vehicle and the crossing vehicle eventually. If the automatic brake is controlled based on the virtual object which corresponds to the crossing vehicle as described above, it can be considered that a collision between the own vehicle and the crossing vehicle can be effectively avoided when the own vehicle enters the intersecting lane.

In the technique disclosed in patent document 2, a virtual stop line is set. However, the object of this technique is to specify a specific stop position, where the own vehicle should be caused to stop, on map data, but is not to avoid a collision between the own vehicle and a crossing vehicle when the own vehicle enters an intersecting lane.

The present invention has been made to overcome one or more of the above-mentioned problems. It is an object of the present invention to provide a vehicle control device, a vehicle control method and/or computer program product which can effectively avoid a collision between the own vehicle and the crossing vehicle when the own vehicle enters an intersecting lane.

Thus, according to an aspect, the problem relates to controlling a vehicle to effectively avoid a collision between the own vehicle and the crossing vehicle when the own vehicle enters an intersecting lane. This problem is solved by the features disclosed by the independent claims. Further exemplary embodiments are defined by the dependent claims.

According to an aspect, a vehicle control device is disclosed. The vehicle control device is configured to assist traveling of a vehicle. Further, provided that a lane intersecting with an own-vehicle lane at an intersection at a time of an own vehicle traveling in the own-vehicle lane entering the intersection is defined as an intersecting lane, and a vehicle traveling in the intersecting lane is defined as a crossing vehicle, the vehicle control device includes: a crossing vehicle detection sensor configured to detect the crossing vehicle approaching the own vehicle while traveling in the intersecting lane; and a controller configured to perform a control of causing the own vehicle to be automatically braked such that a collision between the own vehicle and the crossing vehicle detected by the crossing vehicle detection sensor is avoided when the own vehicle enters the intersecting lane, wherein the controller is configured to set, between the own vehicle and the crossing vehicle, a virtual area which is configured to move with advance of the crossing vehicle and which is configured to extend in an advancing direction of the crossing vehicle, and perform a control of causing the own vehicle to be automatically braked to prevent the own vehicle from contacting with the virtual area.

In various aspects and embodiments described herein, in some circumstances, the "virtual area" may be considered as a "virtual wall". In such a case, the vehicle control device may perform a control of causing the own vehicle to be automatically braked to prevent the own vehicle from colliding with the virtual wall, for example.

Accordingly, in some circumstances, the vehicle control device of the above-stated aspect may, provided that a lane intersecting with an own-vehicle lane at an intersection at a time of an own vehicle traveling in the own-vehicle lane entering the intersection is defined as an intersecting lane, and a vehicle traveling in the intersecting lane is defined as a crossing vehicle, comprise:
a crossing vehicle detection sensor configured to detect the crossing vehicle approaching the own vehicle while traveling in the intersecting lane; and
a controller configured to perform a control of causing the own vehicle to be automatically braked such that a collision between the own vehicle and the crossing vehicle detected by the crossing vehicle detection sensor is avoided when the own vehicle enters the intersecting lane, wherein
the controller is configured to set, between the own vehicle and the crossing vehicle, a virtual wall which is configured to move with advance of the crossing vehicle and which is configured to extend in an advancing direction of the crossing vehicle, and perform a control of causing the own vehicle to be automatically braked to prevent the own vehicle from colliding with the virtual wall.

It is noted that, in various aspects and embodiments as described herein, one or more process steps performed with respect to a virtual area may be performed with respect to a virtual wall in an analogous manner.

According to the configuration of the aspect as stated above, the controller can set the virtual area. The virtual area can be set to avoid a collision between the own vehicle and the crossing vehicle, and the virtual area form an application object of a control of causing the own vehicle to be automatically braked.

Specifically, the controller can set, between the own vehicle and the crossing vehicle, the virtual area which is configured to move with advance of the crossing vehicle and which is configured to extend in the advancing direction of the crossing vehicle, and the controller can perform a control of causing the own vehicle to be automatically braked to prevent the own vehicle from contacting with the virtual area. With such a configuration, it may be possible to cause the own vehicle to be stopped at a position relatively separated from the crossing vehicle to avoid a collision between the own vehicle and the crossing vehicle.

In some exemplary embodiments, the controller may be configured to set the virtual area having a length which corresponds to a time required for the own vehicle to finish passing through the intersecting lane where the crossing vehicle travels, or a time required for the own vehicle to finish merging into the intersecting lane where the crossing vehicle travels. To "merge" may mean to travel in the advancing direction specified in the intersecting lane.

The own vehicle which finishes passing through the intersecting lane or the own vehicle which finishes merging into the intersecting lane can avoid a collision with a crossing vehicle. For example, "a time required for the own vehicle to finish passing through the intersecting lane where the crossing vehicle travels, or a time required for the own vehicle to finish merging into the intersecting lane where the crossing vehicle travels" may mean the time required for the own vehicle to finish moving to a position where a collision with the crossing vehicle can be avoided.

According to the above-mentioned configuration, the controller can set the length of the virtual area to a value which corresponds to the time required for the own vehicle to finish moving to a position where a collision with the crossing vehicle can be avoided. By setting the virtual area having such a length, it may be possible to avoid a collision between the own vehicle and the crossing vehicle with certainty.

In some exemplary embodiments, the controller may be configured to set the length of the virtual area based on a distance obtained by multiplying a speed of the crossing vehicle by the time required for the own vehicle to finish passing through the intersecting lane where the crossing vehicle travels, or by the time required for the own vehicle to finish merging into the intersecting lane where the crossing vehicle travels.

According to this configuration, the controller can set the length of the virtual area to a value which corresponds to the time required for the own vehicle to finish moving to a position where a collision with the crossing vehicle can be avoided, and which corresponds to the speed of the crossing vehicle. By setting the virtual area having such a length, it may be possible to avoid a collision between the own vehicle and the crossing vehicle with certainty.

In some exemplary embodiments, the controller may be configured to perform a control of causing the own vehicle to be automatically braked to prevent the own vehicle from entering the intersection.

According to this configuration, it may be possible to dispose the own vehicle at a safer position while a collision between the own vehicle and the crossing vehicle is avoided.

In some exemplary embodiments, the controller may be configured to set a plurality of sampling points along an intended path of the own vehicle at predetermined intervals and, based on at least one of the plurality of sampling points and the virtual area, perform a control of causing the own vehicle to be automatically braked to prevent the own vehicle from contacting with the virtual area, and set a width of the virtual area larger than the predetermined interval.

In the vehicle traveling assist, a plurality of sampling points may be generally set along the intended path of the vehicle (e.g., a path through which the vehicle passes in the future). Thus, an intended path formed of continuous curves or the like may be treated as discrete sections. Accordingly, the plurality of sampling points may be set along the intended path at predetermined intervals, and the state of the vehicle may be detected at each sampling point, and the engine and the brake of the vehicle may be controlled.

According to the above-mentioned configuration, the sampling points can be used in a control of causing the own vehicle to be automatically braked to prevent the own vehicle from contacting with the virtual area, and the width of the virtual area can be set larger than the predetermined interval at which the plurality of sampling points are set. With such setting, even in the case where the intended path extends in the width direction of the virtual area, based on the sampling points and the virtual area, it may be possible to detect that the intended path of the vehicle is present on the virtual area and hence, a collision between the own vehicle and the crossing vehicle can be avoided with certainty.

In some exemplary embodiments, the vehicle control device may include a direction indicator detection sensor configured to detect flashing of a direction indicator of the crossing vehicle, wherein
the controller is configured not to set the virtual area in a case where the direction indicator detection sensor detects flashing of the direction indicator of the crossing vehicle.

In the case where the crossing vehicle is flashing the direction indicator, it may be anticipated that the crossing vehicle turns left or turns right thereafter. In this case, a possibility of a collision of the own vehicle with the crossing vehicle may be relatively low.

According to the above-mentioned configuration, the controller does not set the virtual area when a possibility of an actual collision of the own vehicle with the crossing vehicle may be low as described above. With such a configuration, it may be possible to avoid a collision between the own vehicle and the crossing vehicle while inhibiting that the own vehicle is unnecessarily automatically braked.

Further, according to another aspect, a vehicle control method is provided for assisting traveling of a vehicle. The vehicle control method, provided that a lane intersecting with an own-vehicle lane at an intersection at a time of an own vehicle traveling in the own-vehicle lane entering the intersection is defined as an intersecting lane, and a vehicle traveling in the intersecting lane is defined as a crossing vehicle, comprises:
detecting, by a crossing vehicle detection sensor, the crossing vehicle approaching the own vehicle while traveling in the intersecting lane; and
performing, by a controller, a control of causing the own vehicle to be automatically braked such that a collision between the own vehicle and the crossing vehicle detected by the crossing vehicle detection sensor is avoided when the own vehicle enters the intersecting lane,
wherein said control of causing the own vehicle to be automatically braked such that a collision between the own vehicle and the crossing vehicle is avoided includes:
   setting, between the own vehicle and the crossing vehicle, a virtual area which is configured to move with advance of the crossing vehicle and which is configured to extend in an advancing direction of the crossing vehicle, and
   performing a control of causing the own vehicle to be automatically braked to prevent the own vehicle from contacting with the virtual area.

In the method according to the above-stated aspect, when setting the virtual area, the controller may set the virtual area having a length which corresponds to a time required for the own vehicle to finish passing through the intersecting lane where the crossing vehicle travels, or a time required for the own vehicle to finish merging into the intersecting lane where the crossing vehicle travels.

Further, in some exemplary embodiments, the controller may set the length of the virtual area based on a distance obtained by multiplying a speed of the crossing vehicle by the time required for the own vehicle to finish passing through the intersecting lane where the crossing vehicle travels, or by the time required for the own vehicle to finish merging into the intersecting lane where the crossing vehicle travels.

In some exemplary embodiments, the method according to the above-stated aspect may further comprise:
performing, by the controller, a control of causing the own vehicle to be automatically braked to prevent the own vehicle from entering the intersection.

Further, in some exemplary embodiments, the method according to the above-stated aspect may further comprise:
setting, by the controller, a plurality of sampling points along an intended path of the own vehicle at predetermined intervals and, based on at least one of the plurality of sampling points and the virtual area, perform a control of causing the own vehicle to be automatically braked to prevent the own vehicle from contacting with the virtual area, and
setting, by the controller, a width of the virtual area larger than the predetermined interval.

Further, in some exemplary embodiments, the method according to the above-stated aspect may further comprise:
detecting, by a direction indicator detection sensor, flashing of a direction indicator of the crossing vehicle, wherein the controller is configured not to set the virtual area in a case where the direction indicator detection sensor detects flashing of the direction indicator of the crossing vehicle.

According to yet another aspect, a computer program product is provided. The computer program product comprises computer-readable instructions that, when loaded and run on a computer, cause the computer to perform the method according to the above-stated aspect and various exemplary embodiments thereof.

According to various aspects and embodiments described herein, it may be possible to effectively avoid a collision between the own vehicle and the crossing vehicle by causing the own vehicle to be automatically braked based on the virtual area, which corresponds to the crossing vehicle, when the own vehicle enters the intersecting lane.

### BRIEF DESCRIPTION OF THE DRAWINGS

FIG. 1 is a block diagram showing a schematic configuration of a vehicle control device according to an embodiment;
FIG. 2 is an explanatory view of an automatic brake control according to the embodiment;
FIG. 3 is an explanatory view of the automatic brake control according to the embodiment;
FIG. 4 is an explanatory view of the automatic brake control according to the embodiment; and
FIG. 5 is a flowchart showing a process performed by a controller according to the embodiment.

### DETAILED DESCRIPTION OF THE PREFERRED EMBODIMENTS

Hereinafter, a vehicle control device according to an embodiment will be described with reference to attached drawings.

### <Configuration of vehicle control device>

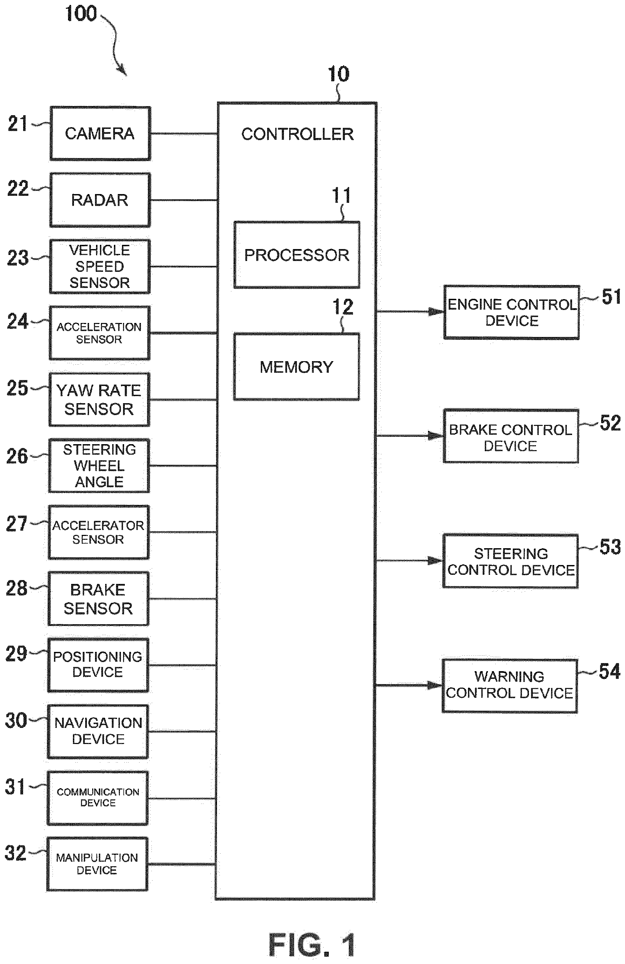

First, the configuration of a vehicle control device 100 according to an exemplary embodiment will be described with reference to FIG. 1. FIG. 1 is a block diagram showing an exemplary schematic configuration of the vehicle control device 100 according to the exemplary embodiment.

As shown in FIG. 1, the vehicle control device 100 may mainly include a controller 10, such as an ECU (Electronic Control Unit), a plurality of sensors and/or switches, and a plurality of control devices. This vehicle control device 100 may be mounted on a vehicle, and may perform various controls to assist traveling of the vehicle.

The plurality of sensors and/or switches may include, but are not limited to, a camera 21, a radar 22, a plurality of behavior sensors (e.g., a vehicle speed sensor 23, an acceleration sensor 24, a yaw rate sensor 25, etc.) which detect behavior of the vehicle, a plurality of behavior switches (e.g., a steering wheel angle sensor 26, an accelerator sensor 27, a brake sensor 28, etc.), a positioning device 29, a navigation device 30, a communication device 31, and/or a manipulation device 32. Further, the plurality of control devices may include, but are not limited to, an engine control device 51, a brake control device 52, a steering control device 53, and/or a warning control device 54.

The controller 10 may comprise a processor 11 and a memory 12 which may store various programs executed by the processor 11. The controller 10 may optionally further include a computer device including an input/output device and the like. The controller 10 may be configured such that, based on signals received from the above-mentioned plurality of sensors and switches, the controller 10 can output control signals to the engine control device 51, the brake control device 52, the steering control device 53, and/or the warning control device 54, for appropriately operating an engine device, a braking device, a steering device, and/or a warning device. Particularly, in this exemplary embodiment, the controller 10 is configured as follows. The controller 10 controls a braking device via the brake control device 52 to avoid a collision between the own vehicle, on which the controller 10 is mounted, and a predetermined object (for example, a crossing vehicle, a preceding vehicle, a pedestrian, an obstacle or the like) around this own vehicle. Such a control can cause the own vehicle to be automatically braked, by causing an automatic brake to be operated.

The camera 21 may photograph an area around the vehicle, and outputs image data. The controller 10 may identify various objects based on the image data received from the camera 21. For example, the controller 10 may identify a preceding vehicle, a crossing vehicle, parked vehicles, motorcycles, pedestrians, the traveling road, division lines (e.g., a center line, lane boundary lines, white lines, yellow lines), the traffic zone and the traffic division of a lane, traffic lights, traffic signs, stop lines, intersections, obstacles and the like. Based on the image data received from the camera 21, the controller 10 may also identify flashing of the direction indicator and/or a headlamp of a crossing vehicle.

The radar 22 may measure positions and speeds of various objects which are present in the area around the vehicle. For example, the radar 22 may measure positions and speeds of an object, such as a preceding vehicle, a crossing vehicle, parked vehicles, motorcycles, pedestrians, or a falling object on the traveling road. A millimeter wave radar may be used as the radar 22, for example. This radar 22 may transmit radio waves in the advancing direction of the vehicle, and may receive reflected waves generated due to reflection of the transmitted waves on an object. Then, based on the transmitted waves and the received waves, the radar 22 may measure a distance between the vehicle and the object (an inter-vehicle distance, for example) and the relative speed of the object with respect to the vehicle.

Note that a laser radar may be used as the radar 22 in place of the millimeter wave radar, or an ultrasonic sensor or another sensor may also be used in place of the radar 22. Further, the position and the speed of an object may also be measured by using the plurality of sensors in combination.

The vehicle speed sensor 23 may detect the speed of the vehicle (also referred to as the "vehicle speed"). The acceleration sensor 24 may detect acceleration of the vehicle. The yaw rate sensor 25 may detect a yaw rate generated in the vehicle. The steering wheel angle sensor 26 may detect the rotation angle (e.g., steering angle) of a steering wheel of the vehicle. The accelerator sensor 27 may detect the pressing amount of an accelerator pedal. The brake sensor 28 may detect the pressing amount of a brake pedal. The controller 10 can calculate the speed of an object based on the speed of the vehicle, which may be detected by the vehicle speed sensor 23, and the relative speed of the object, which may be detected by the radar 22.

The positioning device 29 may include a GPS receiver and/or a gyro sensor, and may detect the position of the vehicle (in other words, "current vehicle position information"). The navigation device 30 may store map information therein, and can provide the map information to the controller 10. Based on the map information and the current vehicle position information, the controller 10 may identify roads, intersections, traffic lights, buildings and the like which are present in the area around the vehicle (particularly in the advancing direction). The map information may be stored in the controller 10. Further, the map information may include information relating to the traffic zone and/or the traffic division of a lane.

The communication device 31 may perform inter-vehicle communication with other vehicles around the own vehicle, and may perform road-vehicle communication with road-side communication devices installed in the area around the own vehicle. The communication device 31 may acquire, through such inter-vehicle communication and road-vehicle communication, communication data from other vehicles and traffic data (e.g., traffic congestion information, speed limit information, traffic light information and the like) from transportation infrastructure, and the communication device 31 may output these data to the controller 10.

The manipulation device 32 may be an input device which is provided in a cabin, and which is operated by a driver for performing various settings relating to the vehicle. For example, the manipulation device 32 may include switches and buttons provided to an instrument panel, a dash panel, and a center console, a touch panel provided to a display device and the like. The manipulation device 32 may output a manipulation signal which corresponds to the manipulation of the driver to the controller 10. Particularly in this exemplary embodiment, the manipulation device 32 is configured to be capable of switching between ON and OFF of a control for assisting traveling of the vehicle, and to be capable of adjusting contents of control for assisting traveling of the vehicle. For example, operating the manipulation device 32 may allow the driver to:
switch between ON and OFF of the automatic brake for avoiding a collision between the own vehicle and an object;
perform various setting relating to a virtual area which is used when the automatic brake is performed;
perform setting of warning timing for avoiding a collision between the own vehicle and the object; and/or
switch between ON and OFF of a control for causing the steering wheel to be vibrated for avoiding a collision between the own vehicle and the object.

Note that at least one of the camera 21, the radar 22 and the communication device 31 may be considered as one example of the "crossing vehicle detection sensor" according to the present disclosure. Further, at least one of the camera 21 and the communication device 31 may be considered as one example of the "direction indicator detection sensor" according to the present disclosure.

The engine control device 51 may control the engine of the vehicle. The engine control device 51 may be a component which can adjust an engine output (e.g., driving force). For example, the engine control device 51 may include a variable valve train and the like which vary opening/closing timing of a spark plug, a fuel injection valve, a throttle valve, and an intake and exhaust valve. When it is necessary to cause the vehicle to accelerate or decelerate, the controller 10 may transmit, to the engine control device 51, a control signal to change an engine output.

The brake control device 52 may control the braking device of the vehicle. The brake control device 52 may be a component which can adjust a braking force generated by the braking device, and may include brake actuators, such as a hydraulic pump and a valve unit, for example. When it is necessary to cause the vehicle to decelerate, the controller 10 may transmit, to the brake control device 52, a control signal to generate a braking force.

The steering control device 53 may control the steering device of the vehicle. The steering control device 53 may be a component which can adjust the steering angle of the vehicle, and may include an electric motor and the like of an electric power steering system, for example. When it is necessary to change the advancing direction of the vehicle, the controller 10 may transmit, to the steering control device 53, a control signal to change a steering direction.

The warning control device 54 may control a warning device which can issue a predetermined warning to a driver. This warning device may be the display device, a speaker and the like provided to the vehicle. For example, when a possibility of a collision of the own vehicle with an object increases, the controller 10 may transmit a control signal to the warning control device 54 to issue a warning from the warning device. Particularly in this example, the controller 10 causes an image for notifying a high possibility of a collision with the object to be displayed on the display device, and/or causes voice for notifying a high possibility of a collision with the object to be outputted from the speaker.

### <Automatic brake control>

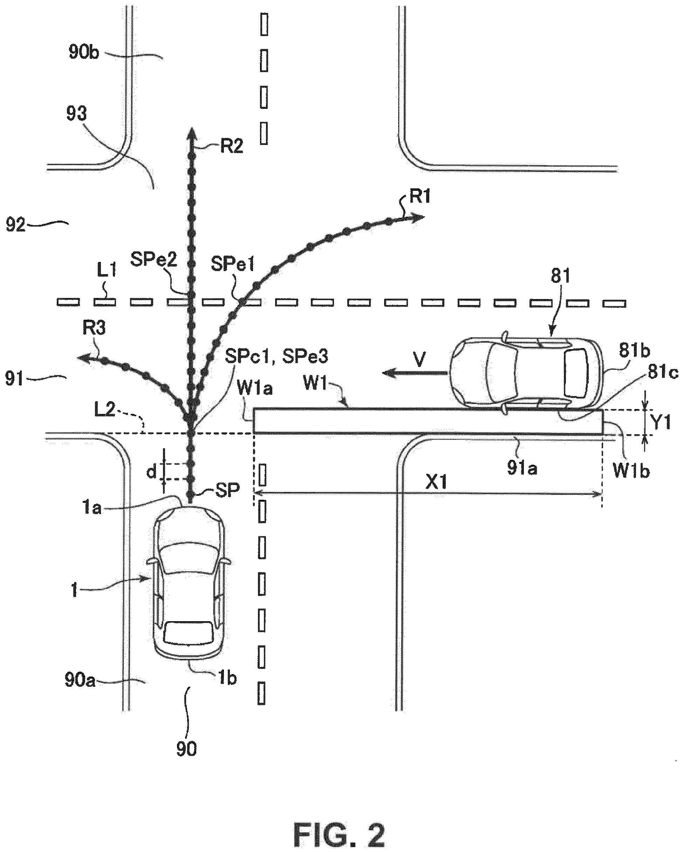

Next, the automatic brake control according to the exemplary embodiment will be described. Particularly in this exemplary embodiment, when the own vehicle enters an intersecting lane (the intersecting lane may be understood as a lane intersecting with an own-vehicle lane at an intersection when the own vehicle traveling in the own-vehicle lane enters the intersection), the controller 10 performs a control of causing the own vehicle to be automatically braked to avoid a collision between the own vehicle and a crossing vehicle traveling in the intersecting lane. FIG. 2 to FIG. 4 show an exemplary environment where, as in the case of traffic conditions in Japan, vehicles traveling in the left lane is specified by traffic regulations.

### [1. Case where crossing vehicle is approaching from right side]

First, the description will be made, with reference to FIG. 2, with respect to an automatic brake control which may be performed in the case where a crossing vehicle approaches the own vehicle from the right side. FIG. 2 is an explanatory view of the automatic brake control according to the exemplary embodiment.

In the specific example shown in FIG. 2, an own-vehicle lane 90 intersects with two lanes at an intersection 93, and is divided into a first portion 90a and a second portion 90b. Hereinafter, of the two lanes which intersect with the own-vehicle lane 90, a lane closer to the first portion 90a is referred to as "first intersecting lane 91", and a lane closer to the second portion 90b is referred to as "second intersecting lane 92". Each of the first intersecting lane 91 and the second intersecting lane 92 may be considered as one example of the "intersecting lane" according to the present disclosure. In FIG.2, the first and second intersecting lanes 91 and 92 are defined by a division line L1.

The controller 10 may set a plurality of sampling points SP along the intended path of an own vehicle 1 (in other words, a path through which the own vehicle 1 passes in the future). The sampling points SP may be virtual points, arranged at intervals d (for example, 10 cm intervals). The controller 10 may detect the traveling state of the own vehicle 1 (for example, speed, acceleration, and/or posture of the own vehicle 1) at each sampling point SP, and may control the engine and the brake of the own vehicle 1, thereby assisting traveling of the own vehicle 1 along the intended path.

In the specific example shown in FIG. 2, the own vehicle 1 travels in the first portion 90a of the own-vehicle lane 90, and enters the intersection 93. On the other hand, a crossing vehicle 81 is attempting to enter the intersection 93 while traveling in the first intersecting lane 91 at a speed V (which may be an absolute value). In other words, in the specific example shown in FIG. 2, the crossing vehicle 81 is approaching the own vehicle 1 from the right side of the own vehicle 1.

In such a situation, the controller 10 controls the automatic brake such that a collision between the own vehicle 1 and the crossing vehicle 81 is avoided. In this specific example, the controller 10 sets a virtual area W1 in this control.

### [1-1. Virtual area in case where own vehicle turns right at intersection]

The description will be made with respect to the case where, as in the case of an intended path R1 shown in FIG. 2, the own vehicle 1 turns right at the intersection 93. In this specific example, the own vehicle 1 changes the advancing direction thereof to the rightward direction while entering the first intersecting lane 91. Then, the own vehicle 1 passes through the first intersecting lane 91, and merges into the second intersecting lane 92.

The virtual area W1 may be considered as a virtual object which is set to avoid a collision between the own vehicle 1 and the crossing vehicle 81, and which forms an application object of an automatic brake control. The virtual area W1 may be set between the own vehicle 1 and the crossing vehicle 81, and may extend in the advancing direction of the crossing vehicle 81 along an end portion 91a of the first intersecting lane 91. The end portion 91a of the first intersecting lane 91 may be defined based on curbstones or a white line provided to the first intersecting lane 91, for example. For the portion of the first intersecting lane 91 to which the own-vehicle lane 90 is connected, the controller 10 may set a virtual extension L2 extending along the end portion 91a, and set the virtual area W1 along the extension L2. In the specific example shown in FIG. 2, the virtual area W1 has a length X1 specified by a front end W1a on the own vehicle 1 side and a rear end W1b on the crossing vehicle 81 side (in other words, a length from the front end W1a to the rear end W1b). The rear end W1b may be set at a position which corresponds to a rear end 81b of the crossing vehicle 81.

The controller 10 may set the length X1 of the virtual area W1, corresponding to the time required for the own vehicle 1 to finish passing through the first intersecting lane 91 while turning right. Specifically, the controller 10 may first calculate a time te1 required for the own vehicle 1 to finish passing through the first intersecting lane 91 (in other words, the time required for the own vehicle 1 to finish merging into the second intersecting lane 92). To be more specific, the controller 10 may first identify one sampling point SP present on the division line L1 from a plurality of sampling points SP arranged along the intended path R1 of the own vehicle 1. When the sampling point SP is not present on the division line L1, the controller 10 may identify the sampling point SP which is present on the second intersecting lane 92 and which is closest to the division line L1. Hereinafter, the sampling point SP identified as described above is referred to as "sampling point SPe1". Further, the controller 10 may calculate the time required for a rear end 1b of the own vehicle 1 to arrive at the sampling point SPe1 as the time te1 required for the own vehicle 1 to finish passing through the first intersecting lane 91.

The controller 10 may set the length X1 based on the formula expressed by "X1=V×te1". In other words, the controller 10 may set the length X1 of the virtual area W1 to a value which corresponds to the time te1 required for the own vehicle 1 to finish passing through the first intersecting lane 91 and to the speed V of the crossing vehicle 81.

The controller 10 may also set the virtual area W1 between the crossing vehicle 81 and the end portion 91a of the first intersecting lane 91. To be more specific, the virtual area W1 may have a width Y1 ranging from a side surface portion 81c of the crossing vehicle 81 to the end portion 91a of the first intersecting lane 91. The controller 10 may set the width Y1 of the virtual area W1 larger than the interval d (for example, 80 cm) at which the sampling points SP are set. With such setting, when the intended path R1 of the own vehicle 1 is present on the virtual area W1, at least one sampling point SP is present on the virtual area W1.

The side surface portion 81c may be set to a position in the vicinity of the crossing vehicle 81. The position of the side surface portion 81c is not limited to the outer side surface of the crossing vehicle 81. The side surface portion 81c may be set to a position separated from the outer side surface of the crossing vehicle 81 if such a position is useful to avoid a collision between the own vehicle 1 and the crossing vehicle 81 as will be described later.

### [1-2. Virtual area in case where own vehicle travels straight at intersection]

Next, the description will be made with respect to the case where, as in the case of an intended path R2 shown in FIG. 2, the own vehicle 1 travels straight at the intersection 93. In this specific example, of the intended path R2, a portion from the own vehicle 1 to the extension L2 is equal to that of the above-mentioned intended path R1. In this specific example, the own vehicle 1 passes through the first intersecting lane 91 and the second intersecting lane 92, and enters the second portion 90b of the own-vehicle lane 90.

The controller 10 may set the length X1 of the virtual area W1 to correspond to the time required for the own vehicle 1 to finish passing through the first intersecting lane 91 while traveling straight. Specifically, the controller 10 may first calculate a time te2 required for the own vehicle 1 to finish passing through the first intersecting lane 91 (in other words, the time required for the own vehicle 1 to finish entering the second intersecting lane 92). To be more specific, the controller 10 may first identify one sampling point SP present on the division line L1 from the plurality of sampling points SP arranged along the intended path R2 of the own vehicle 1. When the sampling point SP is not present on the division line L1, the controller 10 may identify the sampling point SP which is present on the second intersecting lane 92 and which is closest to the division line L1. Hereinafter, the sampling point SP identified as described above is referred to as "sampling point SPe2". Further, the controller 10 may calculate the time required for the rear end 1b of the own vehicle 1 to arrive at the sampling point SPe2 as the time te2 required for the own vehicle 1 to finish passing through the first intersecting lane 91.

The controller 10 may set the length X1 based on the formula expressed by "X1=V×te2". In other words, the controller 10 may set the length X1 of the virtual area W1 to a value which corresponds to the time te2 required for the own vehicle 1 to finish passing through the first intersecting lane 91 and to the speed V of the crossing vehicle 81.

### [1-3. Virtual area in case where own vehicle turns left at intersection]

Next, the description will be made with respect to the case where, as in the case of an intended path R3 shown in FIG. 2, the own vehicle 1 turns left at the intersection 93. In this specific example, of the intended path R3, a portion from the own vehicle 1 to the extension L2 is equal to that of the above-mentioned intended path R1. In this specific example, the own vehicle 1 turns left at the intersection 93, and merges into the first intersecting lane 91.

The controller 10 may set the length X1 of the virtual area W1 to correspond to the time required for the own vehicle 1 to finish merging into the first intersecting lane 91 while turning left. Specifically, the controller 10 may first calculate a time te3 required for the own vehicle 1 to finish merging into the first intersecting lane 91 (in other words, the time required for the own vehicle 1 to finish passing through the first portion 90a of the own-vehicle lane 90). To be more specific, the controller 10 may first identify one sampling point SP present on the extension L2 from the plurality of sampling points SP arranged along the intended path R3 of the own vehicle 1. When the sampling point SP is not present on the extension L2, the controller 10 may identify the sampling point SP which is present on the first intersecting lane 91 and which is closest to the extension L2. Hereinafter, the sampling point SP identified as described above is referred to as "sampling point SPe3". Further, the controller 10 may calculate the time required for the rear end 1b of the own vehicle 1 to arrive at the sampling point SPe3 as the time te3 required for the own vehicle 1 to finish merging into the first intersecting lane 91.

The controller 10 may set the length X1 based on the formula expressed by "X1=V×te3". In other words, the controller 10 may set the length X1 of the virtual area W1 to a value which corresponds to the time te3 required for the own vehicle 1 to finish merging into the first intersecting lane 91 and to the speed V of the crossing vehicle 81.

### [1-4. Automatic brake control which uses virtual area]

The controller 10 may cause the virtual area W1 having such a shape to move with the advance of the crossing vehicle 81 (in other words, cause the virtual area W1 to advance toward the own vehicle 1 together with the crossing vehicle 81). The controller 10 may control the automatic brake to prevent the own vehicle 1 from contacting with this virtual area W1.

Specifically, the controller 10 may first identify one sampling point SP present on the extension L2 from the plurality of sampling points SP arranged along the intended path R1 to R3 of the own vehicle 1. When the sampling point SP is not present on the extension L2, the controller 10 may identify the sampling point SP which is present on the first intersecting lane 91 and which is closest to the extension L2. Hereinafter, the sampling point SP identified as described above is referred to as "sampling point SPcl". The sampling point SPc1 in this exemplary embodiment is equal to the above-mentioned sampling point SPe3.

The controller 10 may calculate Time to Collision/predicted time to collision (TTC) of the own vehicle 1 with respect to the virtual area W1. Specifically, the controller 10 may calculate the time required for a front end 1a of the own vehicle 1 to arrive at the sampling point SPc1 based on the speed and acceleration of the own vehicle 1 and the distance from the own vehicle 1 to the sampling point SPc1.

The controller 10 may determine whether or not it is necessary to perform an automatic brake based on TTC calculated as described above. When the controller 10 determines that the automatic brake is necessary, the controller 10 may control the braking device via the brake control device 52 to cause the own vehicle 1 to stop without protruding to the first intersecting lane 91.

### [2. Case where crossing vehicle is approaching from left side]

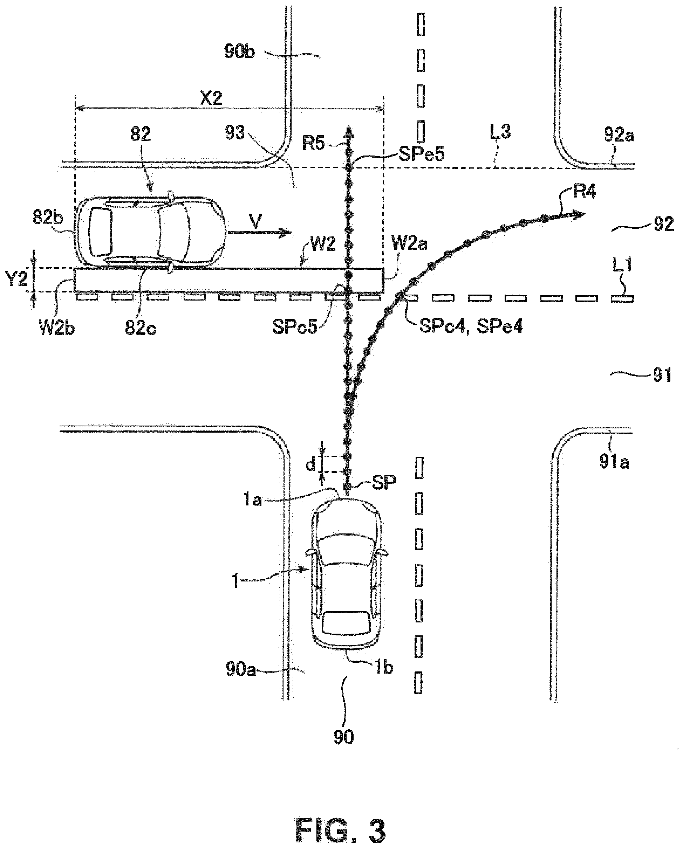

Next, the description will be made, with reference to FIG. 3, with respect to an automatic brake control which may be performed in the case where a crossing vehicle approaches the own vehicle from the left side. FIG. 3 is an explanatory view of the automatic brake control according to the exemplary embodiment. The description of configurations and processes which are substantially equal to those in the above-mentioned case will be omitted when appropriate.

In the specific example shown in FIG. 3, the own vehicle 1 travels in the first portion 90a of the own-vehicle lane 90, and enters the intersection 93. On the other hand, a crossing vehicle 82 is attempting to enter the intersection 93 while traveling in the second intersecting lane 92 at a speed V (which may be an absolute value). In other words, in the specific example shown in FIG. 3, the crossing vehicle 82 is approaching the own vehicle 1 from the left side of the own vehicle 1.

The controller 10 may set a virtual area W2 to avoid a collision between the own vehicle 1 and the crossing vehicle 82. The virtual area W2 may be set between the own vehicle 1 and the crossing vehicle 82, and extend in the advancing direction of the crossing vehicle 82 along the division line L1. In the specific example shown in FIG. 3, the virtual area W2 has a length X2 specified by a front end W2a on the own vehicle 1 side and a rear end W2b on the crossing vehicle 82 side (in other words, a length from the front end W2a to the rear end W2b). The rear end W2b may be set at a position which corresponds to a rear end 82b of the crossing vehicle 82.

### [2-1. Virtual area in case where own vehicle turns right at intersection]

The description will be made with respect to the case where, as in the case of an intended path R4 shown in FIG. 3, the own vehicle 1 turns right at the intersection 93. In this specific example, the own vehicle 1 changes the advancing direction thereof to the rightward direction while entering the first intersecting lane 91. Then, the own vehicle 1 passes through the first intersecting lane 91, and merges into the second intersecting lane 92.

The controller 10 may set the length X2 of the virtual area W2 to correspond to the time required for the own vehicle 1 to finish merging into the second intersecting lane 92 while turning right. Specifically, the controller 10 may first calculate the time required for the own vehicle 1 to finish merging into the second intersecting lane 92 (hereinafter referred to as "te4"). To be more specific, the controller 10 may first identify one sampling point SP present on the division line L1 from the plurality of sampling points SP arranged along the intended path R4 of the own vehicle 1. When the sampling point SP is not present on the division line L1, the controller 10 may identify the sampling point SP which is present on the second intersecting lane 92 and which is closest to the division line L1. Hereinafter, the sampling point SP identified as described above is referred to as "sampling point SPe4". Further, the controller 10 may calculate the time required for the rear end 1b of the own vehicle 1 to arrive at the sampling point SPe4 as the time te4 required for the own vehicle 1 to finish merging into the second intersecting lane 92.

The controller 10 may set the length X2 based on the formula expressed by "X2=V×te4". In other words, the controller 10 may set the length X2 of the virtual area W2 to a value which corresponds to the time te4 required for the own vehicle 1 to finish merging into the second intersecting lane 92 and to the speed V of the crossing vehicle 82.

The controller 10 may also set the virtual area W2 between the crossing vehicle 82 and the division line L1. To be more specific, the virtual area W2 may have a width Y2 ranging from a side surface portion 82c of the crossing vehicle 82 to the division line L1. The controller 10 may set the width Y2 of the virtual area W2 larger than the interval d (for example, 80 cm) at which the sampling points SP are set. With such setting, when the intended path R4 of the own vehicle 1 is present on the virtual area W2, it may be assumed that at least one sampling point SP is present on the virtual area W2.

### [2-2. Virtual area in case where own vehicle travels straight at intersection]

Next, the description will be made with respect to the case where, as in the case of an intended path R5 shown in FIG. 3, the own vehicle 1 travels straight at the intersection 93. In this specific example, the own vehicle 1 passes through the first intersecting lane 91 and the second intersecting lane 92, and enters the second portion 90b of the own-vehicle lane 90.

The controller 10 may set the length X2 of the virtual area W2 to correspond to the time required for the own vehicle 1 to finish passing through the second intersecting lane 92 while traveling straight. Specifically, the controller 10 may first calculate a time te5 required for the own vehicle 1 to finish passing through the second intersecting lane 92 (in other words, the time required for the own vehicle 1 to finish entering the second portion 90b of the own-vehicle lane 90). To be more specific, the controller 10 may set a virtual extension L3 extending along an end portion 92a of the second intersecting lane 92, and may identify one sampling point SP present on the extension L3 from the plurality of sampling points SP arranged along the intended path R5 of the own vehicle 1. When the sampling point SP is not present on the extension L3, the controller 10 may identify the sampling point SP which is present at the second portion 90b of the own-vehicle lane 90 and which is closest to the extension L3. Hereinafter, the sampling point SP identified as described above is referred to as "sampling point SPe5". Further, the controller 10 may calculate the time required for the rear end 1b of the own vehicle 1 to arrive at the sampling point SPe5 as the time te5 required for the own vehicle 1 to finish passing through the second intersecting lane 92.

The controller 10 may set the length X2 based on the formula expressed by "X2=V×te5". In other words, the controller 10 may set the length X2 of the virtual area W2 to a value which corresponds to the time te5 required for the own vehicle 1 to finish passing through the second intersecting lane 92 and to the speed V of the crossing vehicle 82.

### [2-3. Automatic brake control which uses virtual area]

The controller 10 may cause the virtual area W2 having such a shape to move with advance of the crossing vehicle 82 (in other words, cause the virtual area W2 to advance toward the own vehicle 1 together with the crossing vehicle 82). The controller 10 may control the automatic brake to prevent the own vehicle 1 from contacting with this virtual area W2.

Specifically, the controller 10 may first identify one sampling point SP present on the division line L1 from the plurality of sampling points SP arranged along the intended path R4, R5 of the own vehicle 1. When the sampling point SP is not present on the division line L1, the controller 10 may identify the sampling point SP which is present on the second intersecting lane 92 and which is closest to the division line L1. Hereinafter, the sampling point SP identified as described above is referred to as "sampling point SPc4", "sampling point SPc5". The sampling point SPc4 in this exemplary embodiment is equal to the above-mentioned sampling point SPe4.

The controller 10 may calculate TTC of the own vehicle 1 with respect to the virtual area W2. Specifically, the controller 10 may calculate the time required for the front end 1a of the own vehicle 1 to arrive at the sampling point SPc4, SPc5 based on the speed and acceleration of the crossing vehicle 82 with respect to the own vehicle 1 and the distance from the own vehicle 1 to the sampling point SPc4, SPc5.

The controller 10 may determine whether or not it is necessary to perform an automatic brake based on TTC calculated as described above. When the controller 10 determines that the automatic brake is necessary, the controller 10 may control the braking device via the brake control device 52, thereby causing the own vehicle 1 to stop without protruding to the first intersecting lane 91.

### [3. Case where crossing vehicle is approaching from right side while flashing direction indicator]

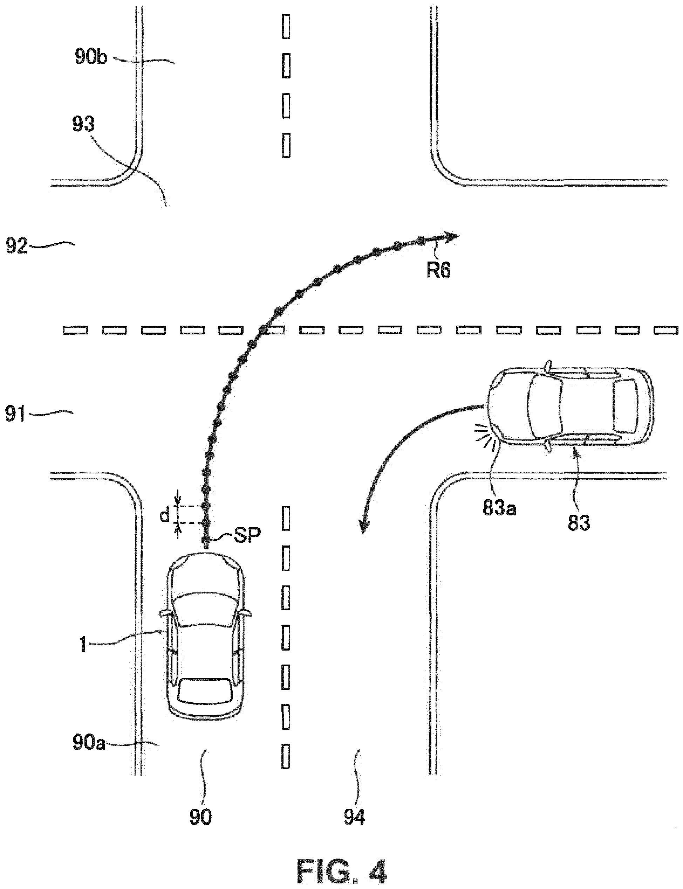

Next, the description will be made, with reference to FIG. 4, with respect to an automatic brake control which may be performed in the case where a crossing vehicle approaches the own vehicle from the right side while flashing a direction indicator. FIG. 4 is an explanatory view of the automatic brake control according to the exemplary embodiment. The description of configurations and processes which are substantially equal to those in the above-mentioned case will be omitted when appropriate.

In the specific example shown in FIG. 4, the own vehicle 1 travels in the first portion 90a of the own-vehicle lane 90, and enters the intersection 93. On the other hand, a crossing vehicle 83 is attempting to enter the intersection 93 while traveling in the first intersecting lane 91. In other words, in the specific example shown in FIG. 4, the crossing vehicle 83 is approaching the own vehicle 1 from the right side of the own vehicle 1.

As in the case of an intended path R6 shown in FIG. 4, the own vehicle 1 is attempting to turn right at the intersection 93. On the other hand, the crossing vehicle 83 is approaching while flashing a direction indicator 83a of the crossing vehicle 83.

In such a case, it may be anticipated that the crossing vehicle 83 does not travel straight at the intersection 93 thereafter. In other words, as the intension to change the advancing direction indicated by flashing the direction indicator 83a, it may be anticipated that the crossing vehicle 83 turns left at the intersection 93, and enters another lane 94. In this case, a possibility of a collision of the own vehicle 1 with the crossing vehicle 83 may be relatively low and hence, the controller 10 does not cause an automatic brake to be operated.

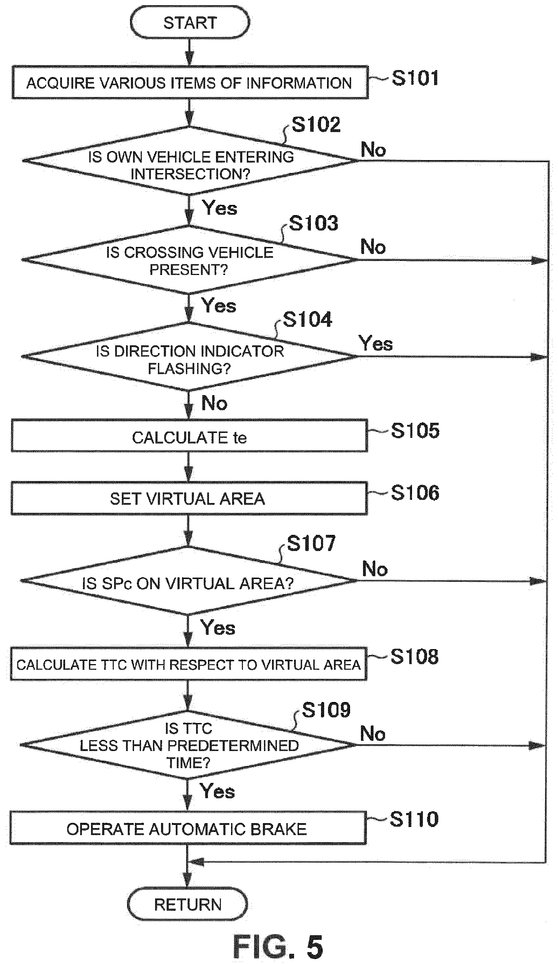

Next, an exemplary process that may be performed by the controller 10 will be described with reference to FIG. 5. FIG. 5 is a flowchart showing an exemplary process performed by the controller 10 according to the exemplary embodiment. The controller 10 may repeatedly perform the exemplary process of the flowchart in a predetermined cycle (in a 100 ms cycle, for example).

First, in step S101, the controller 10 may acquire various items of information from the above-mentioned plurality of sensors and switches. Specifically, the controller 10 may acquires various items of information based on signals inputted from the camera 21, the radar 22, the vehicle speed sensor 23, the acceleration sensor 24, the yaw rate sensor 25, the steering wheel angle sensor 26, the accelerator sensor 27, the brake sensor 28, the positioning device 29, the navigation device 30, the communication device 31, and/or the manipulation device 32.

Next, in step S102, the controller 10 may determine whether or not the own vehicle 1 is attempting to enter the intersection. Specifically, the controller 10 may determine whether or not an intersection is present in the vicinity of the own vehicle 1 and in the advancing direction of the own vehicle 1 based on signals (e.g., which correspond to image data) inputted from the camera 21, signals (e.g., which correspond to map information and current vehicle position information) inputted from the navigation device 30, and/or signals (e.g., which correspond to road-vehicle communication) inputted from the communication device 31. When it is determined that the own vehicle 1 is attempting to enter the intersection (step S102: Yes), the controller 10 may advance the process to step S103. On the other hand, when it is not determined that the own vehicle 1 is attempting to enter the intersection (step S102: No), the controller 10 may cause the process to skip a series of routines shown in this flowchart.

Next, in step S103, the controller 10 may determine whether or not a crossing vehicle 8 (which may correspond to any one of the above-mentioned crossing vehicles 81 to 83) approaching the own vehicle 1 while traveling in the intersecting lane is present. Specifically, based on signals (e.g., which correspond to image data) inputted from the camera 21, signals inputted from the radar 22, signals (e.g., signals which correspond to inter-vehicle communication) inputted from the communication device 31 and/or other signals, the controller 10 may perform a process for detecting the crossing vehicle 8 approaching the own vehicle 1. As a result, when the crossing vehicle 8 approaching the own vehicle 1 is detected, the controller 10 may determine that the crossing vehicle 8 is present (step S103: Yes), and the process may advance to step S104. On the other hand, when the crossing vehicle 8 approaching the own vehicle 1 is not detected, the controller 10 may determine that the crossing vehicle 8 is not present (step S103: No) so that the process may skip the series of routines shown in this flowchart.

Next, in step S104, the controller 10 may determine whether or not the direction indicator of the crossing vehicle 8 (e.g., which may correspond to the above-mentioned direction indicator 83a of the crossing vehicle 83) is flashing. Specifically, based on signals (e.g., signals which correspond to image data) inputted from the camera 21, signals (e.g., signals which correspond to inter-vehicle communication) inputted from the communication device 31 and/or other signals, the controller 10 may perform a process for detecting flashing of the direction indicator. As a result, when the flashing of the direction indicator of the crossing vehicle 8 is not detected, the controller 10 may determine that the direction indicator of the crossing vehicle 8 is not flashing (step S104: No), and the process may advance to step S105. On the other hand, when the flashing of the direction indicator is detected, the controller 10 may determine that the direction indicator is flashing (step S104: Yes) so that the process may skip the series of routines shown in this flowchart.

Next, in step S105, the controller 10 may calculate the time te (which may correspond to any one of the above-mentioned times te1 to te5) required for the own vehicle 1 to arrive at the sampling point SPe (which may correspond to any one of the above-mentioned sampling points SPe1 to SPe5) on the intended path R (which may correspond to any one of the above-mentioned intended paths R1 to R5). In other words, the controller 10 may calculate the time te (which may correspond to the above-mentioned time te1, te2 or te5) required for the own vehicle 1 to finish passing through the intersecting lane where the crossing vehicle 8 is traveling, or the time te (which may correspond to the above-mentioned time te3 or te4) required for the own vehicle 1 to finish merging into the intersecting lane where the crossing vehicle 8 is traveling. Specifically, the controller 10 may first identify one sampling point SPe as described above from the plurality of sampling points SP set along the intended path R. Then, the controller 10 may calculate the time te required for the rear end 1b of the own vehicle 1 to arrive at the sampling point SPe based on the speed of the own vehicle 1 and the like.

Next, in step S106, the controller 10 may set the virtual area W (which may correspond to the above-mentioned virtual area W1 or W2) based on the speed V of the crossing vehicle 8 and the time te calculated as described above. Specifically, the controller 10 may set the virtual area W which is configured to extend from a rear end 8b (which may correspond to the above-mentioned rear end 81b or 82b) of the crossing vehicle 8 in the advancing direction of the crossing vehicle 8 by a length X (which may correspond to the above-mentioned length X1 or X2), and which has the width Y (which may corresponds to the above-mentioned width Y1 or Y2).

Next, in step S107, the controller 10 may determine whether or not the sampling point SPc (which may correspond to any one of the above-mentioned sampling points SPc1, SPc4, SPc5) is present on the virtual area W. In other words, the controller 10 may determine whether or not the virtual area W (particularly, the front end of the virtual area W) arrives at the sampling point SPc due to advance of the crossing vehicle 8. Specifically, the controller 10 may perform the determination in step S107 based on the position of the sampling point SPc identified as described above and the position of the front end of the virtual area W. As a result, when it is determined that the sampling point SPc is present on the virtual area W (step S107: Yes), the controller 10 may advance the process to step S108.

On the other hand, when it is not determined in step S107 that the sampling point SPc is present on the virtual area W (step S107: No), the controller 10 may cause the process to skip the series of routines shown in this flowchart. When the sampling point SPc is not present on the virtual area W as described above, the crossing vehicle 8 may be considered as being sufficiently separated from the own vehicle 1. In other words, it may be considered that there is no possibility of a collision with the crossing vehicle 8 even if the own vehicle 1 enters the intersecting lane. Accordingly, in this case, the controller 10 does not perform an automatic brake control based on the virtual area W.

Next, in step S108, the controller 10 may calculate TTC of the own vehicle 1 with respect to the virtual area W. Specifically, it may be assumed that the own vehicle 1 collides with the virtual area W when the front end 1a of the own vehicle 1 arrives at the sampling point SPc. Accordingly, the controller 10 may use the time required for the front end 1a of the own vehicle 1 to arrive at the sampling point SPc as TTC.

Next, in step S109, the controller 10 may determine whether or not TTC calculated as described above is less than a predetermined time (e.g., a specified time that is set or determined before performing the determination of step S109). The predetermined time may be a threshold of TTC which specifies timing at which the operation of the automatic brake should be started to cause the own vehicle 1 to stop without entering the intersection. The predetermined time may be set by a predetermined arithmetic expression (e.g., a specified arithmetic expression), a simulation, an experiment or the like (in other words, the predetermined time may be a fixed value or a variable value).

As a result of step S109, when it is determined that TTC is less than the predetermined time (step S109: Yes), the controller 10 may advance the process to step S110. In step S110, the controller 10 may control the braking device via the brake control device 52 to cause the automatic brake to be operated, in other words, to cause the own vehicle 1 to be automatically braked. With such control, a braking force may be applied to the own vehicle 1 to decelerate the own vehicle 1 and hence, the own vehicle 1 may be stopped in front of the virtual area W.

Note that the controller 10 may control the warning control device 54 such that a warning is issued from the warning device when the automatic brake is operated as described above. For example, the controller 10 may cause an image and/or voice for a notification of high possibility of a collision with the crossing vehicle to be outputted on/from the display device and/or the speaker with the operation of the automatic brake. For example, it may be preferable to issue a warning from the warning device before the automatic brake is operated.

On the other hand, as a result of step S109, when it is not determined that TTC is less than the predetermined time (step S109: No), in other words, when TTC is the predetermined time or more, the controller 10 may cause the process to skip the series of routines shown in this flowchart. In this case, the controller 10 does not cause the automatic brake to be operated.

Next, exemplary manner of operation and possible advantageous effects according to the embodiment will be described.

According to this configuration, the controller 10 may set the virtual area W. The virtual area W may be set to avoid a collision between the own vehicle 1 and the crossing vehicle 8 (which may correspond to the above-mentioned crossing vehicle 81 or 82). Further, the virtual area W may be considered as an application object for a control of causing the own vehicle 1 to be automatically braked.

Specifically, the controller 10 may set, between the own vehicle 1 and the crossing vehicle 8, the virtual area W which is configured to move with the advance of the crossing vehicle 8 and which is configured to extend in the advancing direction of the crossing vehicle 8. Further, the controller 10 may perform a control of causing the own vehicle 1 to be automatically braked to prevent the own vehicle 1 from contacting with the virtual area W. With such a configuration, it may be possible to cause the own vehicle 1 to be stopped at a position relatively separated from the crossing vehicle 8 to avoid a collision between the own vehicle 1 and the crossing vehicle 8.

Further, the controller 10 may be configured to set the virtual area W having the length X which corresponds to the time te (which may corresponds to the above-mentioned time te1, te2 or te5) required for the own vehicle 1 to finish passing through the intersecting lane where the crossing vehicle 8 is traveling, or which corresponds to the time te (which corresponds to the above-mentioned time te3 or te4) required for the own vehicle 1 to finish merging into the intersecting lane where the crossing vehicle 8 is traveling. According to this configuration, the controller 10 can set the length X of the virtual area W to a value which corresponds to the time required for the own vehicle 1 to finish moving to a position where a collision with the crossing vehicle 8 can be avoided. By setting the virtual area W having such a length, it may be possible to avoid a collision between the own vehicle 1 and the crossing vehicle 8 with certainty.

Further, the controller 10 may be configured to set the length X of the virtual area W based on a distance acquired by multiplying the speed V of the crossing vehicle 8 by the time te (which may corresponds to the above-mentioned time te1, te2 or te5) required for the own vehicle 1 to finish passing through the intersecting lane where the crossing vehicle 8 is traveling, or by the time (which may corresponds to the above-mentioned time te3 or te4) required for the own vehicle 1 to finish merging into the intersecting lane where the crossing vehicle 8 is traveling. According to this configuration, the controller 10 can set the length X of the virtual area W to a value which corresponds to the time te required for the own vehicle 1 to finish moving to a position where a collision with the crossing vehicle 8 can be avoided, and which corresponds to the speed V of the crossing vehicle 8. By setting the virtual area W having such a length X, it may be possible to avoid a collision between the own vehicle 1 and the crossing vehicle 8 with certainty.

Further, the controller 10 may be configured to perform a control of causing the own vehicle 1 to be automatically braked to prevent the own vehicle 1 from entering the intersection. According to this configuration, it may be possible to dispose the own vehicle 1 at a safer position while a collision between the own vehicle 1 and the crossing vehicle 8 is avoided.

Further, the controller 10 may set the plurality of sampling points SP at intervals d along the intended path R of the own vehicle 1. The controller 10 may be configured to perform, based on one sampling point SPc and the virtual area W, a control of causing the own vehicle 1 to be automatically braked to prevent the own vehicle 1 from contacting with the virtual area W. Further, the controller 10 may set the width Y of the virtual area W larger than the interval d. According to this configuration, the sampling point SP may be used in a control of causing the own vehicle 1 to be automatically braked to prevent the own vehicle 1 from contacting with the virtual area W, and the width Y of the virtual area W may be set larger than the interval d at which the plurality of sampling points SP are set. With such setting, even in the case where the intended path R extends in the width direction of the virtual area W, based on the sampling point SP and the virtual area W, it may be possible to detect that the intended path R of the own vehicle 1 is present on the virtual area W and hence, a collision between the own vehicle 1 and the crossing vehicle 8 can be avoided with certainty.

Further, the vehicle control device 100 may include the camera 21 and/or the communication device 31 which may detect flashing of the direction indicator of the crossing vehicle 8. The controller 10 may be configured not to perform a control of causing the own vehicle 1 to be automatically braked to prevent the own vehicle 1 from contacting with the virtual area W when the camera 21 and/or the communication device 31 detect(s) flashing of the direction indicator of the crossing vehicle 8. According to this configuration, the controller 10 does not set the virtual area W when a possibility of an actual collision of the own vehicle 1 with the crossing vehicle 8 is low. Accordingly, it may be possible to avoid a collision between the own vehicle 1 and the crossing vehicle 8 while inhibiting that the own vehicle 1 is unnecessarily automatically braked.

The above-mentioned exemplary embodiment is directed to the automatic brake control at the intersection 93 having a cross shape. However, the present disclosure is not limited to such a mode. For example, the present disclosure may be also applicable to an own vehicle which enters an intersection, such as a so-called "T-intersection".

### Reference Signs List

1 own vehicle
10 controller
21 camera (an example of a crossing vehicle detection sensor and/or a direction indicator detection sensor)
22 radar (an example of a crossing vehicle detection sensor)
31 communication device (an example of a crossing vehicle detection sensor and/or a direction indicator detection sensor)
81, 82 crossing vehicle
90 own-vehicle lane
91 first intersecting lane (intersecting lane)
92 second intersecting lane (intersecting lane)
93 intersection
100 vehicle control device
SP sampling point
W1, W2 virtual area

## Claims

1. A vehicle control device (100) which is configured to assist traveling of a vehicle, provided that a lane intersecting with an own-vehicle lane at an intersection at a time of an own vehicle (1) traveling in the own-vehicle lane entering the intersection is defined as an intersecting lane (91, 92), and a vehicle traveling in the intersecting lane (91, 92) is defined as a crossing vehicle (81, 82, 83), the vehicle control device comprising:
a crossing vehicle detection sensor (21, 22, 31) configured to detect the crossing vehicle (81, 82, 83) approaching the own vehicle (1) while traveling in the intersecting lane (91, 92); and
a controller (10) configured to perform a control of causing the own vehicle (1) to be automatically braked such that a collision between the own vehicle (1) and the crossing vehicle (81, 82) detected by the crossing vehicle detection sensor (21, 22, 31) is avoided when the own vehicle (1) enters the intersecting lane (91, 92), wherein
the controller (10) is configured to
set, between the own vehicle (1) and the crossing vehicle (81, 82), a virtual area (W1, W2) which is configured to move with advance of the crossing vehicle (81, 82) and which is configured to extend in an advancing direction of the crossing vehicle (81, 82), and
perform a control of causing the own vehicle (1) to be automatically braked to prevent the own vehicle (1) from contacting with the virtual area (W1, W2).

2. The vehicle control device (100) according to claim 1, wherein the controller (10) is configured to set the virtual area (W1, W2) having a length which corresponds to a time required for the own vehicle (1) to finish passing through the intersecting lane (91, 92) where the crossing vehicle (81, 82) travels, or a time required for the own vehicle (1) to finish merging into the intersecting lane where the crossing vehicle (81, 82) travels.

3. The vehicle control device (100) according to claim 2, wherein the controller (10) is configured to set the length of the virtual area (W1, W2) based on a distance obtained by multiplying a speed of the crossing vehicle (81, 82) by the time required for the own vehicle (1) to finish passing through the intersecting lane (91, 92) where the crossing vehicle (81, 82) travels, or by the time required for the own vehicle (1) to finish merging into the intersecting lane (91, 92) where the crossing vehicle (81, 82) travels.

4. The vehicle control device (100) according to any one of claims 1 to 3, wherein the controller (10) is configured to perform a control of causing the own vehicle (1) to be automatically braked to prevent the own vehicle (1) from entering the intersection (91, 92).

5. The vehicle control device (100) according to any one of claims 1 to 4, wherein the controller (10) is configured to
set a plurality of sampling points (SP) along an intended path (R1, R2, R3, R4, R5, R6) of the own vehicle (1) at predetermined intervals (d) and, based on at least one of the plurality of sampling points (SP) and the virtual area (W1, W2), perform a control of causing the own vehicle (1) to be automatically braked to prevent the own vehicle (1) from contacting with the virtual area (W1, W2), and
set a width of the virtual area (W1, W2) larger than the predetermined interval (d).

6. The vehicle control device (100) according to any one of claims 1 to 5, comprising a direction indicator detection sensor (21, 31) configured to detect flashing of a direction indicator (83a) of the crossing vehicle (83), wherein the controller (10) is configured not to set the virtual area (W1, W2) in a case where the direction indicator detection sensor (21, 31) detects flashing of the direction indicator (83a) of the crossing vehicle (83).

7. A vehicle control method for assisting traveling of a vehicle, provided that a lane intersecting with an own-vehicle lane at an intersection at a time of an own vehicle (1) traveling in the own-vehicle lane entering the intersection is defined as an intersecting lane (91, 92), and a vehicle traveling in the intersecting lane (91, 92) is defined as a crossing vehicle (81, 82, 83), the method comprising:
detecting, by a crossing vehicle detection sensor (21, 22, 31), the crossing vehicle (81, 82, 83) approaching the own vehicle (1) while traveling in the intersecting lane (91, 92); and
performing, by a controller (10), a control of causing the own vehicle (1) to be automatically braked such that a collision between the own vehicle (1) and the crossing vehicle (81, 82) detected by the crossing vehicle detection sensor (21, 22, 31) is avoided when the own vehicle (1) enters the intersecting lane (91, 92),
wherein said control of causing the own vehicle (1) to be automatically braked such that a collision between the own vehicle (1) and the crossing vehicle (81, 82) is avoided includes:
setting, between the own vehicle (1) and the crossing vehicle (81, 82), a virtual area (W1, W2) which is configured to move with advance of the crossing vehicle (81, 82) and which is configured to extend in an advancing direction of the crossing vehicle (81, 82), and
performing a control of causing the own vehicle (1) to be automatically braked to prevent the own vehicle (1) from contacting with the virtual area (W1, W2).

8. The method according to claim 7, wherein, when setting the virtual area (W1, W2), the controller (10) sets the virtual area (W1, W2) having a length which corresponds to a time required for the own vehicle (1) to finish passing through the intersecting lane (91, 92) where the crossing vehicle (81, 82) travels, or a time required for the own vehicle (1) to finish merging into the intersecting lane (91, 92) where the crossing vehicle (81, 82) travels.

9. The method according to claim 8, wherein the controller (10) sets the length of the virtual area (W1, W2) based on a distance obtained by multiplying a speed of the crossing vehicle (81, 82) by the time required for the own vehicle (1) to finish passing through the intersecting lane (91, 92) where the crossing vehicle (81, 82) travels, or by the time required for the own vehicle (1) to finish merging into the intersecting lane (91, 92) where the crossing vehicle (81, 82) travels.

10. The method according to any one of claims 7 to 9, further comprising:
performing, by the controller (10), a control of causing the own vehicle (1) to be automatically braked to prevent the own vehicle (1) from entering the intersection.

11. The method according to any one of claims 7 to 10, further comprising:
setting, by the controller (10), a plurality of sampling points (SP) along an intended path (R1, R2, R3, R4, R5, R6) of the own vehicle (1) at predetermined intervals (d) and, based on at least one of the plurality of sampling points (SP) and the virtual area (W1, W2), perform a control of causing the own vehicle (1) to be automatically braked to prevent the own vehicle (1) from contacting with the virtual area (W1, W2), and
setting, by the controller (10), a width of the virtual area (W1, W2) larger than the predetermined interval (d).

12. The method according to any one of claims 7 to 11, further comprising:
detecting, by a direction indicator detection sensor (21, 31), flashing of a direction indicator (83a) of the crossing vehicle (83), wherein the controller (10) is configured not to set the virtual area (W1, W2) in a case where the direction indicator detection sensor (21, 31) detects flashing of the direction indicator (83a) of the crossing vehicle (83).

13. A computer program product comprising computer-readable instructions that, when loaded and run on a computer, cause the computer to perform the method according to any one of claims 7 to 12.
